# EUROPÄISCHE PATENTSCHRIFT

(11) **EP 0 501 276 B1**
(45) Veröffentlichungstag und Bekanntmachung des Hinweises auf die Patenterteilung: **01.05.1996**
(21) Anmeldenummer: 92102642.3
(22) Anmeldetag: 18.02.1992
(51) Int. Cl.: B62D 25/10, B60R 13/08

(54) **Verkleidung für den Motorbereich eines Kraftfahrzeuges**
Cladding of the engine compartment of an automotive vehicle
Revêtement de l'enveloppe moteur d'un véhicule automobile

(30) Priorität: 25.02.1991 DE 4105844
(43) Veröffentlichungstag der Anmeldung: 02.09.1992
(73) Patentinhaber: DEERE & COMPANY, Moline, Illinois 61265 (US)
(72) Erfinder: Teich, Michael, Dipl.-Ing., W-6800 Mannheim 24 (DE)
(74) Vertreter: Feldmann, Bernhard

(56) Entgegenhaltungen:
- DE-A- 2 642 110
- FR-A- 2 300 006
- GB-A- 488 492
- US-A- 2 833 365
- US-A- 4 137 983
- US-A- 4 143 733

## Beschreibung

Die Erfindung betrifft eine Verkleidung für den Motorbereich eines Kraftfahrzeuges, insbesondere eines landwirtschaftlichen oder industriellen Fahrzeuges gemäß dem Oberbegriff des Patentanspruches 1.

Es ist bekannt, den Motorbereich von vorn durch eine Frontplatte oder ein Kühlergrill abzudecken, welche vor dem Motor auf einem mit dem Motor verbundenen Tragbock (Blockbauweise aus Motor, Getriebe und Tragbock) befestigbar sind. Von oben wird der Motor durch eine im Bereich der Kabine schwenkbar befestigte Haube abgedeckt. Eine seitliche Abdeckung des Motors erfolgt durch Seitenteile, die über Haltestreben und dergleichen unmittelbar oder über Befestigungsteile an dem Motor befestigt sind. Die Komponenten wie Kühler, Luftfilter, Ölkühler, Kondensator (Klimaanlage), Batterie, elektrisches Horn und dergleichen sind an verschiedenen Stellen an dem Motorblock oder an mit dem Motor verbundenen Halteteilen befestigt.

Nachteilig ist es hierbei, daß eine relativ aufwendige Montage erforderlich ist, die während der Endmontage des Fahrzeuges am Band erfolgt und somit eine Verkürzung der Bandtaktzeit erschwert oder gar verhindert. Ferner müssen am Motorblock und anderen Stellen Befestigungselemente für die unterschiedlichen Komponenten vorgesehen werden. Vibrationen vom Motor und vom Fahrwerk werden unmittelbar auf die Aggregate übertragen und können deren Funktion und Lebensdauer beeinträchtigen. Der Körperschall wird ungedämpft an die Abdeckteile weitergegeben.

Aus der DE 26 42 110 C2, welche als nächstliegends Stand der Technik gemäß dem Oberbegriff von Anspruch 1 betrachtet werden kann, geht eine Verkleidung für den Motorbereich eines landwirtschaftlichen Schleppers hervor, bei der eine Motorhaube, die frontseitig mit einem Frontteil verbunden ist, über ein Scharnier an einem hinteren Rahmenteil schwenkbar befestigt ist. Seitlich am hinteren sowie an einem vorderen Rahmenteil sind zwei die Brennkraftmaschine seitlich abdeckende Seitenteile befestigbar. Jedes der beiden Rahmenteile ist als unten offener Halter mit einem oberen Steg und daran anschließenden nach unten weisenden Schenkeln ausgebildet. Das vordere Rahmenteil ist über elastische Zwischenglieder mittels Schrauben mit einem Vorderachslagerbock verspannt. Unabhängig hiervon ist das hintere Rahmenteil über elastische Zwischenglieder mit einer am Kraftstoffbehälter starr verbundenen Konsole verbunden. Das mit U- förmigem Querschnitt ausgeführte vordere Rahmenteil dient gleichfalls als Halterung für eine elastische Zwischenwand zwischen Batterieraum und Motorraum. Auch bei dieser Verkleidung können wesentliche Befestigungsarbeiten erst während der Endmontage des Fahrzeuges erfolgen. Da die beiden Rahmenteile an unterschiedlichen Stellen des Fahrzeuges befestigt sind, werden Verspannungen und Vibrationen unmittelbar auf die Abdeckteile übertragen.

Die GB-A-488,492 beschreibt einen vorne bzw. hinten an einem Fahrzeug befestigbaren den Motor abdeckenden Rahmen, an dem Kotflügel, Motorhaubenklappen und gegebenenfalls eine Kühlerverkleidung befestigbar sind. Der Rahmen bildet mit den erwähnten Teilen eine Einheit, die lösbar an dem Fahrzeugrumpf oder - chassis befestigbar ist. Um ein Klappern zu vermeiden, stützt sich der Rahmen über Gummidämpfer oder dergleichen an dem Fahrzeugchassis ab. An der montierten Einheit können auch Fahrzeugscheinwerfer, Seiten- und Rücklampen, Rückblickspiegel und Richtungsanzeiger befestigt sein. Die Einheit soll sich leicht von dem Fahrzeug abnehmen und wieder aufsetzen lassen und damit einen bequemen Zugang zu dem Motor und anderen Teilen ermöglichen. Jedoch bleiben noch wünsche hinsichtlich einer kostengünstigen Herstellbarkeit offen. Ferner können die am Motorblock montierten Fahrzeugkomponenten mechanischen Belastungen durch Verwindungen und Vibrationen, die vom Motorblock ausgehen, ausgesetzt sein.

Die mit der Erfindung zu lösende Aufgabe wird darin gesehen, eine Motorverkleidung der eingangs genannten Art vorzuschlagen, durch die die genannten Nachteile vermieden werden. Insbesondere soll die Übertragung von Vibrationen und Verwindungen von dem Motorblock oder einem Fahrzeuggrundrahmen auf die Abdeckteile und auf die Fahrzeugkomponenten erschwert werden und eine einfache Montage möglich sein.

Die Aufgabe wird bei einer gattungsgemäßen Verkleidung durch die kennzeichnenden Merkmale des Patentanspruchs 1 gelöst.

Durch die steife Ausbildung des Rahmens ergeben sich zweckmäßige Montagestellen für die Abdeckteile und Fahrzeugkomponenten. Bei den am Rahmen befestigbaren Abdeckteilen handelt es sich vor allem um eine Motorhaube, das Frontgrill oder eine Frontplatte und Seitenverkleidungsteile. Als am Rahmen befestigbare Fahrzeugkomponenten kommen vorzugsweise Kühler, Ölkühler, Kondensator für eine Klimaanlage, Luftfilter und Batterie in Betracht. Auch ein Horn und Scheinwerfer können am Rahmen befestigt sein.

Die erfindungsgemäße Ausbildung hat den Vorteil, das der Rahmen während einer Vormontage zusammensetzbar (jedoch zunächst noch ohne die Haube und die Seitenverkleidungen), mit den Komponenten bestückbar und dann bei der Fahrzeugendmontage als komplett vormontierte Rahmeneinheit zur Verfügung steht. Bei der Endmontage ist es dann nur noch erforderlich, die Rahmeneinheit am Fahrzeugrumpf oder auf einem Fahrzeuggrundrahmen zu befestigen, die Verbindungsleitungen der Komponenten anzuschließen und die Verkleidungsteile und die Haube anzubringen. Hierdurch lassen sich die Taktzeiten bei der Fahrzeugendmontage reduzieren.

Vorzugsweise stützt sich der Rahmen im wesentlichen an drei Stellen über elastische Verbindungselemente an dem Tragbock oder Fahrzeugrahmen ab. Als elastische Verbindungselemente kommen zum Beispiel Isolierungen, Dämpfelemente oder Gummilager in Betracht. Durch die steife Ausbildung des Rahmens und die elastische Dreipunktankopplung an den Schlepperrumpf wird die Übertragung von Verwindungen, Körperschall und Stößen von dem Schlepperrumpf (bzw. Fahrzeuggrundrahmen) auf den erfindungsgemäßen Rahmen und die hieran befestigten Komponenten weitgehend unterbunden.

Die Vorteile kommen insbesondere bei einem Schlepper mit einem Grundrahmen zum tragen, da der Grundrahmen zum Beispiel beim Fahren über Bodenunebenheiten tordiert wird, diese Verwindungen jedoch nicht oder nur begrenzt auf den Komponentenrahmen übertragen werden. Damit ist die Belastung auf die am Rahmen befestigten Komponenten geringer als bei deren Befestigung direkt am Schlepperrumpf. Die Lebensdauer der Komponenten kann verlängert werden. Beispielsweise werden Lötstellen der Kühler nicht so hoch beansprucht. Ferner sind kompaktere Komponenten verwendbar als bei einer konventionellen Bauweise. So können im Rahmen montierte Batterien eine höhere Packungsdichte aufweisen, da diese geringeren Erschütterungen ausgesetzt sind.

Bei der Dreipunktabstützung des Rahmens können als eine Befestigungsstelle auch zwei relativ eng benachbarte Befestigungspunkte gelten. Zum Beispiel können zwei hintere, seitlich weit auseinanderliegend angebrachte und zwei vordere relativ eng beieinander liegende Befestigungspunkte vorgesehen werden. Dies kommt einer Dreipunkt-Befestigung nahe, die den Vorteil hat, daß Grundrahmenverwindungen keine Verwindungen des Komponentenrahmens zur Folge haben.

Der Rahmen ist vorzugsweise kastenförmig ausgebildet und wird aus mehreren zusammenschraubbaren Rahmenteilen gebildet. Er besteht beispielsweise aus zwei seitlichen, im wesentlichen rechteckförmigen, aus Einzelteilen zusammengeschweißten Seitenrahmenteilen, die durch mehrere Querstreben miteinander verschraubbar sind. Der aus Einzelteilen bestehende Rahmen beansprucht bis zu seiner Montage nur relativ wenig Lagerraum.

Im vorderen Bereich sind die beiden Seitenrahmenteile vorzugsweise durch eine Bodenplatte miteinander verschraubt. Diese aus einem Blech mit abgewinkelten Rändern bestehende Bodenplatte dient einerseits der Versteifung des Rahmens und andererseits der Abdichtung, damit die von dem Motorlüfter angesaugte Luft ausschließlich durch die hierfür vorgesehenen Kühlergrill- oder Filterelemente geführt wird. An der Bodenplatte sind die erwähnten vorderen Befestigungspunkte für die Rahmenbefestigung angebracht. Auf der Bodenplatte kann die Fahrzeugbatterie befestigt werden.

Im Rahmenbereich, der vor der Antriebskraftmaschine liegt, sind in den Seitenrahmenteilen senkrecht verlaufende Führungselemente zur Aufnahme eines quer zur Fahrtrichtung liegenden, von oben in den Rahmen einschiebbaren Kühlers vorgesehen. Die Führungselemente sind als zum Rahmeninneren offene U-Profile ausgebildet. Im unteren Bereich der Führungsschienen befinden sich Gummiteile, die eine gedämpfte Auflage des Kühlers ermöglichen.

Mit den senkrechten Führungselementen der Seitenrahmenteile ist in deren oberen Bereich eine Quertraverse (zum Beispiel ein senkrecht ausgerichtetes Versteifungsblech) verschraubt. Es kann sich um ein relativ breites Blechteil handeln, welches Durchbrechungen für den Lufteintritt in den dahinter liegenden Kühler sowie eine ausreichende Steifigkeit zur Aufnahme von auf den Rahmen wirkenden Verwindungskräften aufweist. Die Steifigkeit kann durch Falzungen und dergleichen erhöht werden. An dieser Quertraverse können Ölkühler, Luftfilter und Kondensator befestigt werden.

Es ist von Vorteil, an dem Rahmen eine Hutze mit davor liegendem Kühler zu befestigen Die Hutze wirkt im montierten Zustand des Rahmens mit dem Lüfterrad des Motors zusammen. Relativbewegungen zwischen dem am Motor befestigtem Lüfterrad und dem am Rahmen befestigten Kühler werden durch die Hutze ausgeglichen.

Für die Verlegung von Kabeln, Leitungen und dergleichen ist es vorteilhaft, den Rahmen wenigstens teilweise aus U-Profilen zusammenzusetzen. Die durch die U-Profile gebildeten Kanäle bieten Schutz und Lagestabilität für die Kabel und Leitungen.

Der Rahmen kann ferner so ausgebildet werden, daß er das äußere Design des Schleppers mitbestimmt. Vorzugsweise können die längsverlaufenden Streben der Seitenrahmenteile als von außen sichtbare Flächen dienen, auf die Aufkleber mit Typen und/oder Firmenbezeichnungen aufklebbar sind.

An dem Rahmen lassen sich Rahmenseitenteile befestigen. Vorzugsweise ist die Seitenverkleidung längs der Fahrtrichtung in mehrere, selbständig abnehmbare Bereiche (kürzere Panels) aufgeteilt, so daß bei Wartungsarbeiten an bestimmten Motor- oder Komponententeilen jeweils nur der entsprechende Teilbereich der Verkleidung abgenommen oder aufgeklappt zu werden braucht (Servicetor). Für Servicearbeiten lassen sich die Rahmenseitenteile einzeln abschrauben, aushängen oder auf sonstige Weise entfernen oder aufklappen, so daß eine gute Zugänglichkeit zum Motor und den Komponenten gegeben ist.

Die Haube ist an einem querverlaufenden Scharnier in der Nähe des Fahrzeugstandes befestigt. Ihr vorderer Bereich ist am Rahmen verriegelbar und läßt sich nach oben aufstellen. Das vordere Ende der Haube trägt wenigstens einen Teil des Kühlergrills, wodurch bei aufgestellter Haube ein leichterer Zugang zu den vor dem Kühler liegenden Komponenten möglich wird.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: einen Ackerschlepper mit einer erfindungsgemäßen Motorverkleidung in perspektivischer Darstellung,
- Fig. 2: drei Seitenverkleidungsteile in perspektivischer Darstellung,
- Fig. 3: einen erfindungsgemäßen Rahmen in perspektivischer Explosionsdarstellung,
- Fig. 4: den oberen Bereich der Motorverkleidung gemäß Fig. 1 in perspektivischer Explosionsdarstellung und
- Fig. 5: den vorderen Bereich des erfindungsgemäßen Rahmens mit Fahrzeugkomponenten in perspektivischer Darstellung ohne Abdeckteile.

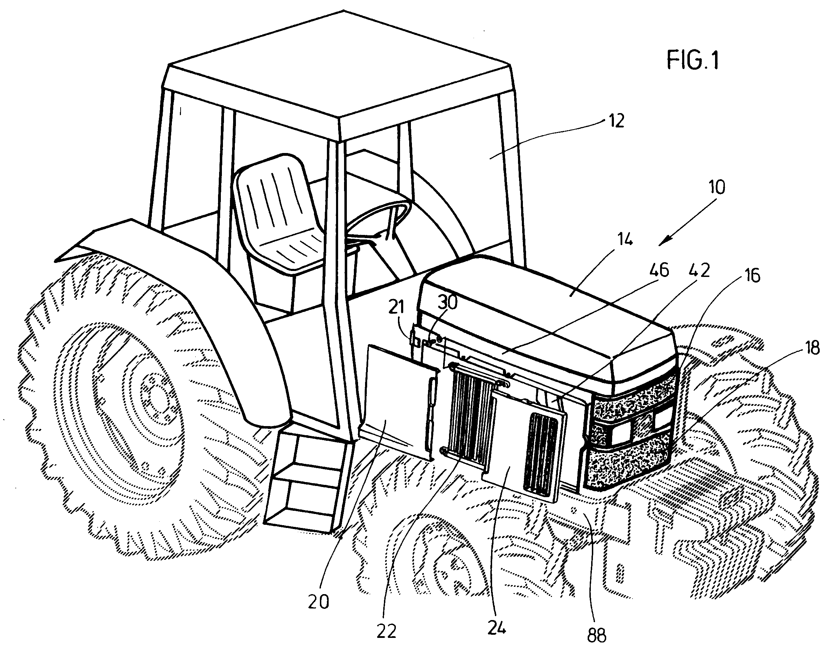

In Fig. 1 ist ein Ackerschlepper angedeutet, dessen nicht sichtbarer Motor sich in seinem vorderen Bereich 10 vor der Fahrerkabine 12 befindet. Der Motor ist durch Abdeckteile umgeben, die zum Teil nach Art einer Explosionsdarstellung vor ihrer eigentlichen montierten Lage dargestellt sind. Bei den Abdeckteilen handelt es sich um eine Motorhaube 14, ein zweiteiliges Frontgrill 16, 18 und Seitenverkleidungsteile 20, 22, 24. Bei den sichtbaren Seitenverkleidungsteilen 20, 22, 24 auf der rechten Schlepperseite handelt es sich um eine Serviceklappe 20, ein Lüftungsgitter 22 und ein vorderes Seitenteil 24.

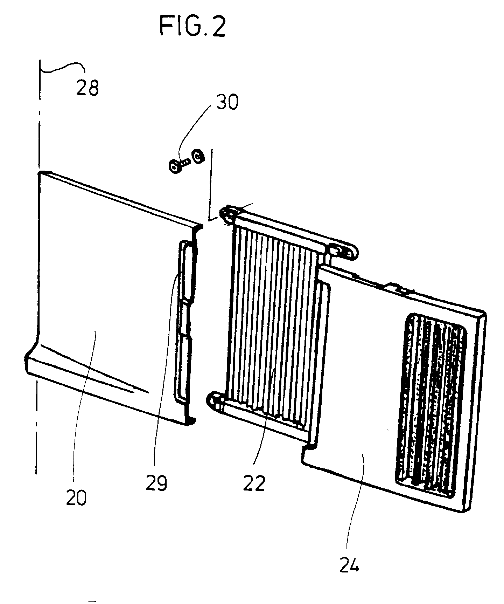

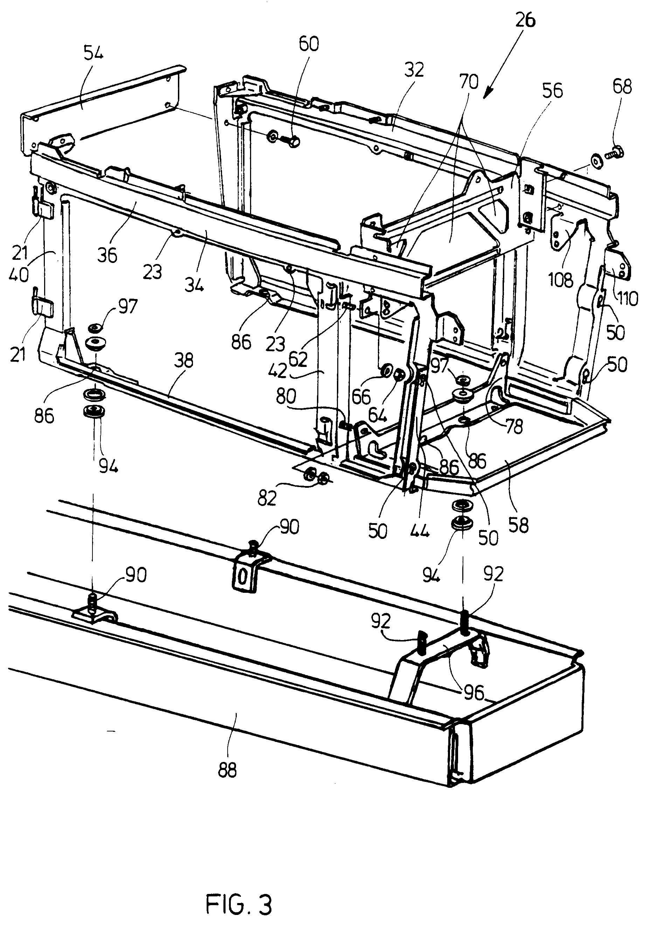

Die Serviceklappe 20 ist über hintere, senkrecht ausgerichtete, in Fig. 2 durch eine Achse 28 angedeutete Scharniere 21 an einem in Fig. 3 dargestellten Rahmen 26 befestigt. Sie läßt sich durch Ziehen an dem Handgriff 29 öffnen. Bei offener Serviceklappe 20 können Servicearbeiten an dahinterliegenden Einrichtungen, wie Ölmeßstab, Ölnachfüllöffnung, Kraftstoffilter, Wasserabscheider, Verriegelungshebel für den Öffnungsmechanismus der Motorhaube 14 und dergleichen vorgenommen werden. Die Serviceklappe 20 kann mit einem Schlüssel verschließbar ausgebildet werden, um einen unbefugten Zugang zu verhindern.

Das Lüftungsgitter 22 ist am Rahmen 26 durch in Bohrungen 23 einschraubbare Schrauben 30, von denen lediglich eine in den Fig. 1 und 2 dargestellt wurde, befestigbar. Das Lüftungsgitter 22 ist in Fahrtrichtung hinter dem Kühler 48 des Motors angeordnet und enthält senkrecht verlaufende Lamellen für den Kühlluftaustritt. Das Lüftungsgitter 22 dient gleichzeitig der Sicherheit und deckt den Lüfter und Keilriemen des Motors ab und verhindert so deren Berührung.

Das vordere Seitenteil 24 ist so ausgebildet, daß sein unterer Bereich durch Einstecken mit dem Rahmen 26 verbindbar ist. Im oberen Bereich enthält das Seitenteil 24 nicht dargestellte Verriegelungselemente, mittels derer eine Schnellbefestigung am Rahmen 26 erfolgen kann. Die Ausbildung erfolgt so, daß bei geschlossener Motorhaube 14 das vordere Seitenteil 24 nicht abnehmbar ist. Das vordere Seitenteil 24 läßt sich einfach abnehmen, falls Reinigungs- oder Wartungsarbeiten an dahinterliegenden Aggregaten, wie Kühler, Ölkühler, Kondensator, Fahrzeugbatterie und dergleichen erforderlich sind. Das Seitenteil 24 weist in seinem vorderen Bereich eine Vielzahl von Durchbrechungen auf, durch die Kühlluft in einen durch den vorderen Rahmenteil eingeschlossenen Raum eindringen kann. Die Durchbrechungen sind so gewählt, daß größere Verunreinigungen und Pflanzenteile vom Eindringen abgehalten werden.

Der Rahmen 26 ist kastenförmig ausgebildet und besteht gemäß Fig. 3 aus mehreren zusammenschraubbaren Teilen. Es handelt sich hierbei im wesentlichen um zwei seitlich neben dem Motor angeordnete, rechteckförmige Seitenrahmenteile 32, 34, die durch quer angeordnete, verschraubbare Verbindungsteile miteinander verbunden sind. Jedes Seitenrahmenteil 32, 34 besteht aus einem oberen, horizontal verlaufenden U-Profil 36, einem unteren, horizontal verlaufenden Winkelprofil 38 und drei Verbindungsstreben 40, 42, 44. Diese Teile sind miteinander verschweißt, so daß die Rahmenseitenteile 32, 34 bei der Montage als komplette, einen beschränkten Lagerraum beanspruchende Einzelteile zur Verfügung stehen.

Das obere U-Profil 36 weist eine nach außen weisende, bei montierter Motorverkleidung sichtbare Fläche 46 auf (Fig. 1), die durch keines der Abdeckteile, also weder durch die Motorhaube 14 noch durch ein Seitenverkleidungsteil 20, 22, 24 verdeckt wird. Auf diese Fläche 46 läßt sich schon vor der Endmontage eine Typenbezeichnung des Schleppers oder dergleichen anbringen.

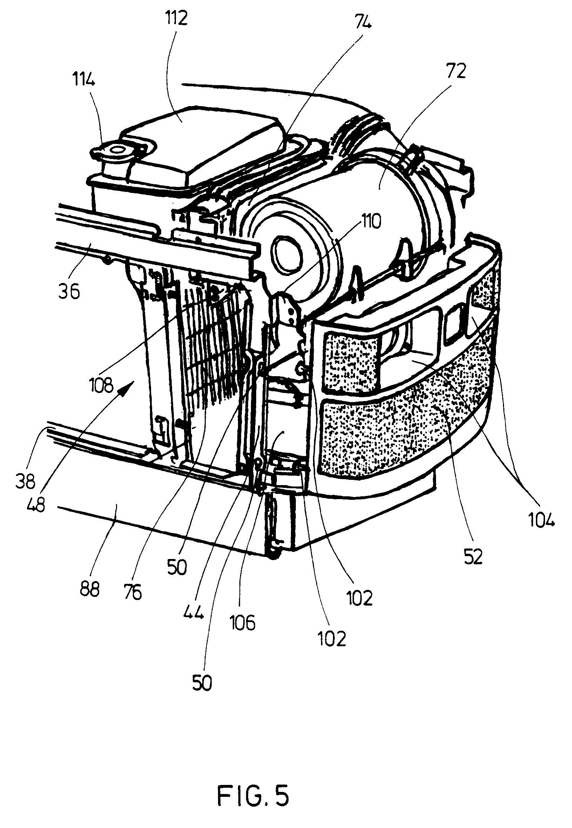

Die hintere Verbindungsstrebe 40 stellt im wesentlichen ein ins Rahmeninnere hin offenes U-Profil dar. Sie trägt die Scharniere 21 für die Serviceklappe 20. Die mittlere Verbindungsstrebe 42 besteht ebenfalls aus einem zum Rahmeninneren hin offenen U-Profil. Die sich gegenüberliegenden mittleren Verbindungsstreben 42 sind derart angeordnet und ausgebildet, daß sie beim vormontierten Rahmen senkrecht verlaufende Führungsschienen bilden, in die ein Kühler 48 (Fig. 5) von oben einschiebbar ist. In den Führungsschienen 42 sind nicht dargestellte Gummiteile befestigt, die eine gedämpfte Auflage des Kühlers 48 ermöglichen. Die vordere Verbindungsstrebe 44 enthält Verbindungsmittel 50 zur Befestigung eines unteren Frontgrills 52.

Bei den die Seitenrahmenteile 32, 34 verbindenden Verbindungsteilen handelt es sich um eine Querstrebe 54, eine Quertraverse 56 und eine Bodenplatte 58. Die Querstrebe 54 ist aus Gründen der Versteifung winkelförmig ausgebildet und wird durch Schrauben 60, von denen lediglich eine in Fig. 3 gezeigt ist, an dem hinteren, oberen Ende der Seitenrahmenteile 32, 34 befestigt. Sie liegt damit in montiertem Zustand über dem Motor und unmittelbar vor der Fahrzeugkabine 12.

Die Quertraverse 56 ist ein senkrecht ausgerichtetes Versteifungsblech, welches von vorne auf Bolzen 62 der mittleren Verbindungsstrebe 42 aufsteckbar und durch Unterlegscheiben 66 und Muttern 64 an der Verbindungsstrebe 42 befestigbar ist. Der Befestigung der Quertraverse 56 an den oberen Seitenrahmenteilen 32, 34 dienen ferner Schrauben 68. Die Quertraverse 56 weist Durchbrechungen 70 auf, die mit Luftdurchtrittsöffnungen eines hinter der Quertraverse 56 montierbaren Kühlers 48 korrespondieren. Sie enhält außerdem Befestigungsmittel für weitere Aggregate, wie zum Beispiel den Ölkühler 74 und den Kondensator 76 einer Klimaanlage.

Die Bodenplatte 58 ist wannenförmig ausgebildet, indem ihre Seitenkanten nach oben abgekantet sind. Die hintere Seitenkante 78 der Bodenplatte 58 läßt sich auf gleiche Weise wie die Quertraverse 56 auf Bolzen 80 der mittleren Verbindungsstreben 42 aufstecken und durch Muttern 82 verschrauben. Ferner dienen der Verschraubung mit dem unteren Winkelprofil 38 Schrauben, die nicht dargestellt wurden. Durch die Bodenplatte 58 wird der vordere Bereich des Rahmens 26 von unten her hermetisch abgedichtet, so daß von hier aus keine Kühlluft in den Innenraum des Rahmens 26 treten kann.

Der vormontierte Rahmen 26 ist weitgehend steif, formstabil und verwindungsfest. In den unteren Winkelprofilen 38 der Seitenrahmenteile 32, 34 und in der Bodenplatte 58 befinden sich insgesamt vier Bohrungen 86, deren Lagen mit auf einem Fahrzeugrahmen 88 angeordneten Bolzen 90, 92 korrespondieren und die der Befestigung des Rahmens 26 auf dem Fahrzeugrahmen 88 dienen. Zur Unterdrückung von Verwindungskräften und Vibrationen, die vom Fahrzeugrahmen 88 ausgehen, sind Gummilager 94 vorgesehen, die vor der Montage des Fahrzeugrahmens 88 auf die Bolzen 90, 92 aufgesteckt werden. Die beiden hinteren Bolzen 90 sind auf Holmen des Fahrzeugrahmens 88 befestigt und haben einen relativ großen Abstand zueinander. Die beiden vorderen Bolzen 92 sind auf einer zwischen den Holmen angeordneten Verbindungsbrücke 96 befestigt. Ihr gegenseitiger Abstand ist relativ gering. Durch die Abstandsverhältnisse der Bolzen 90, 92 ergibt sich im wesentlichen eine Dreipunktbefestigung des Rahmens 26, so daß Verwindungen des Fahrzeugrahmens 88 sich nicht auf den Rahmen 26 übertragen. Nachdem der Rahmen 26 über die Gummilager 94 auf die Bolzen 90 aufgesteckt ist, läßt er sich durch Aufschrauben von Muttern 97 befestigen.

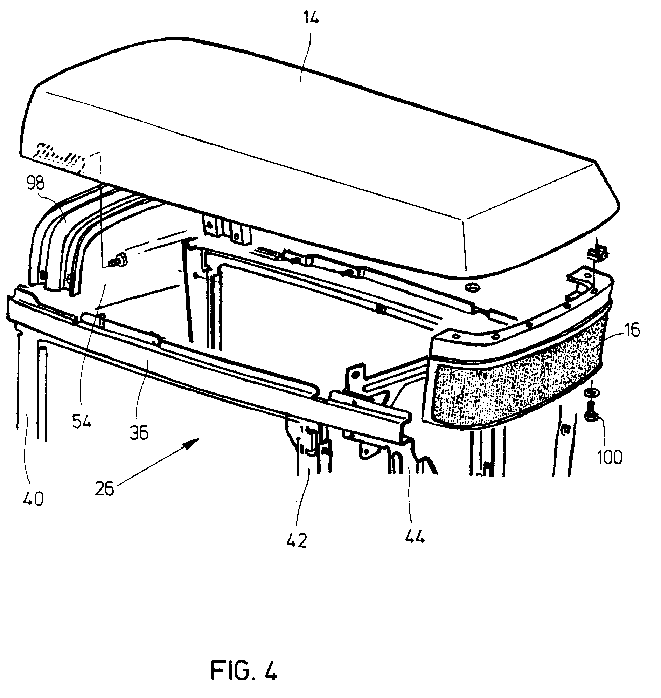

In Fig. 4 ist der obere Bereich des Rahmens 26 mit darüberliegender Motorhaube 14 und einem oberen Frontgrillteil 16 dargestellt. Im hinteren Bereich des Rahmens 26 sind die beiden oberen U-Profile 36 durch einen sich nach oben wölbenden Bügel 98 miteinander verbunden. Auf dem Bügel 98 liegt der hintere Bereich der Motorhaube 14 auf. Hier befindet sich auch die nicht dargestellte Haubenaufstellachse, um die sich beim Öffnen der Motorhaube 14 der vordere Haubenbereich nach oben verschwenken läßt. Bei dem Haubenaufstellmechanismus kann es sich um eine beliebige bekannte Ausführung handeln.

Am vorderen Ende der Motorhaube 14 ist das obere Teil eines zweiteiligen Frontgrills 16 durch Schrauben 100 befestigbar. Beim Aufstellen der Motorhaube 14 wird somit auch das obere Frontgrill 16 angehoben, so daß eine gute Zugänglichkeit zu den im vorderen Rahmenteil, der in Fig. 5 näher dargestellt wurde, untergebrachten Komponenten gegeben ist.

An den vorderen Verbindungsstreben 44 des Rahmens 26 ist das untere Frontgrill 52 eingehängt. Hierfür trägt das Frontgrill 52 hervorstehende Schauben 102, von denen in Fig. 5 lediglich zwei sichtbar sind. Die Schraubenköpfe werden bei der Montage in sich nach unten verjüngende Ausnehmungen 50 in den Verbindungsstreben 44 gesteckt. Durch Herunterdrücken des Frontgrills 52 werden die Schraubenköpfe in den Ausnehmungen 50 eingeklemmt.

Aus Fig. 5 geht die Anordnung einiger Aggregate im vorderen Bereich des Rahmens 26 hervor. Im unteren Frontgrill 52 sind Scheinwerfer 104 integriert. Auf der Bodenplatte 58 ist die Fahrzeugbatterie 106 befestigt. Darüber ist an den Laschen 108 und 110 ein Luftfilter 72 befestigt. Wie bereits erwähnt wurde, ist in die Führung, die durch die beiden Verbindungsstreben 42 gebildet wurde, ein Kühler 48 eingesetzt, der in Fig. 5 durch den Kondensator 76 verdeckt und daher nicht sichtbar ist, dessen Lage jedoch durch den Pfeil 48 in Fig. 5 bezeichnet ist.

Auf der rückwärtigen Seite des Kühlers 48 ist eine nicht dargestellte Hutze montiert, die formschlüssig mit dem Rahmen 26 in Verbindung steht. In der Hutze läuft der Lüfter des Motors. Durch die Hutze können Relativbewegungen zwischen Rahmen 26 und Motor, die durch Verwindungen des Fahrzeugrahmens 88 oder Vibrationen hervorgerufen werden, ausgeglichen werden.

Über dem Kühler 48 ist ein Ausgleichsbehälter 112 für die Kühlflüssigkeit mit Einfüllöffnung 114 befestigt. Vor dem Kühler 48 ist an der Quertraverse 56 ein Ölkühler 74 und darunter ein Kondensator 76 einer Klimaanlage montiert.

Neben den dargestellten Aggregaten können noch weitere Fahrzeugkomponenten, wie beispielsweise Horn und Hydraulikölbehälter, im vorderen Bereich des Rahmens 26 angeordnet werden. Eine sehr gute Zugänglichkeit zu diesen Aggregaten ist gewährleistet. Hierfür brauchen lediglich die Motorhaube 14 aufgestellt und die vorderen Seitenteile 24 und gegebenenfalls das untere Frontgrill 52 abgenommen zu werden.

Die elektrischen, hydraulischen und sonstigen Leitungen der Aggregate sind in den durch die U-Profile der Rahmenteile gebildeten Kanälen verlegt und damit vor Beschädigungen geschützt.

## Patentansprüche

1. Verkleidung für den Motorbereich eines Kraftfahrzeuges, insbesondere eines landwirtschaftlichen oder industriellen Fahrzeuges, durch die der Motor sowie weitere Fahrzeugkomponenten wenigstens teilweise durch Abdeckteile, wie Motorhaube (14), Frontgrill (16, 18) und Seitenabdeckungen (20, 22, 24), abgedeckt werden, mit einem den Motorbereich einschließenden formstabilen Rahmen (26), an dem die Abdeckteile befestigbar sind und der mit den Abdeckteilen eine an dem Motor, an einem am Motor befestigten Tragbock oder an einem Fahrzeugrahmen (88) befestigbare Einheit bildet, dadurch gekennzeichnet, daß an dem Rahmen (26) Fahrzeugkomponenten wie Kühler, Ölkühler, Luftfilter, Batterie und Kondensator für eine Klimaanlage sowie gegebenenfalls deren elektrische und hydraulische Leitungen derart befestigbar sind, daß der Rahmen mit den Fahrzeugkomponenten eine vormontierbare Einheit bildet.

2. Verkleidung nach Anspruch 1, dadurch gekennzeichnet, daß der Rahmen (26) sich im wesentlichen an drei Stellen über elastische Verbindungselemente (94) an dem Tragbock oder Fahrzeugrahmen (88) abstützt.

3. Verkleidung nach Anspruch 2, dadurch gekennzeichnet, daß sich im vorderen Bereich des Rahmens (26) zwei seitlich relativ nahe beieinanderliegende Abstützstellen (92) und im hinteren Bereich des Rahmens (26) zwei in der Nähe der seitlichen Rahmenbegrenzungen relativ weit auseinanderliegende Abstüztstellen (90) befinden.

4. Verkleidung nach einem der Ansprüche 1 bis 3, dadurch gekennzeichnet, daß der Rahmen (26) kastenförmig ausgebildet ist und aus zwei im wesentlichen rechteckigen, einteiligen Seitenrahmenteilen (32, 34) besteht, die durch Querstreben (54, 56, 58, 98) miteinander verschraubbar sind.

5. Verkleidung nach einem der Ansprüche 1 bis 4, dadurch gekennzeichnet, daß im vorderen Bereich zwischen seitlichen Rahmenteilen (32, 34) eine Bodenplatte (58) angeordnet ist.

6. Verkleidung nach einem der Ansprüche 1 bis 5, dadurch gekennzeichnet, daß in sich gegenüberliegenden seitlichen Rahmenteilen (32, 34) im wesentlichen senkrecht verlaufende Führungselemente (42) zur Aufnahme eines Kühlers (48) angeordnet sind.

7. Verkleidung nach einem der Ansprüche 1 bis 6, dadurch gekennzeichnet, daß im oberen Rahmenbereich zwischen zwei seitlichen Rahmenteilen (32, 34) eine Quertraverse (56) angeordnet ist, die dem Rahmen (26) Verwindungssteifigkeit verleiht und der Aufnahme von Fahrzeugkomponenten dient.

8. Verkleidung nach einem der Ansprüche 1 bis 7, dadurch gekennzeichnet, daß an dem Rahmen (26) eine Hutze mit davorliegendem Kühler (48) befestigbar ist, die im montierten Zustand des Rahmens (26) mit dem Lüfterrad des Motors zusammenwirkt.

9. Verkleidung nach einem der Ansprüche 1 bis 8, dadurch gekennzeichnet, daß der Rahmen (26) wenigstens teilweise aus U-Profilen zusammengesetzt ist.

10. Verkleidung nach einem der Ansprüche 1 bis 9, dadurch gekennzeichnet, daß der Rahmen (26) längsverlaufende Rahmenteile (36) aufweist, die nach Anbringung der Abdeckteile von außen sichtbar bleiben.

11. Verkleidung nach einem der Ansprüche 1 bis 10, dadurch gekennzeichnet, daß an wenigstens einer Seite des Rahmens (26) mehrere einzeln montierbare Seitenverkleidungsteile (20, 22, 24) befestigbar sind, von denen wenigstens eines als Klappe (20) ausgebildet ist.

12. Verkleidung nach einem der Ansprüche 1 bis 11, dadurch gekennzeichnet, daß die Motorhaube (14) sich über die Länge des Rahmens (26) erstreckt und daß sie sich um ein hinteres, am Rahmen (26) befestigtes Gelenk aufstellen läßt.

13. Verkleidung nach einem der Ansprüche 1 bis 12, dadurch gekennzeichnet, daß das Frontgrill zweiteilig ausgebildet ist und daß ein oberes Frontgrill (16) an dem vorderen Ende der Motorhaube (14) und ein unteres Frontgrill (18) an dem Rahmen (26) befestigbar ist.

## Claims

1. Cladding for the engine compartment of a motor vehicle, in particular an agricultural or industrial vehicle, by means of which the engine as well as other vehicle components are covered at least partially by covering parts such as engine hood (14), front grill (16, 18) and side covers (20, 22, 24), with a dimensionally stable frame (26) enclosing the engine compartment, on which frame the covering parts can be attached and which forms, with the covering parts, a unit which may be attached to the engine, to a support structure on the engine or to a vehicle frame (88), characterised in that vehicle components such as the radiator, oil cooler, air filter, battery and condenser for an air conditioning unit, as well as, optionally, their electric and hydraulic leads, may be attached to the frame (26), that, with the vehicle components, the frame forms a unit which may be pre-assembled.

2. Cladding according to Claim 1, characterised in that the frame (26) is essentially supported at three points on the support structure or vehicle frame (88) via elastic connecting elements (94).

3. Cladding according to Claim 2, characterised in that in the front region of the frame (26), two support points (92) lying relatively close side by side to each other, and in the rear region of the frame (26), two support points (90) lying relatively far from one another are located in the vicinity of the lateral frame boundaries.

4. Cladding according to one of Claims 1 to 3, characterised in that the frame (26) is box-shaped and comprises two essentially rectangular, one-piece side frame portions (32, 34), which may be screwed to one another by means of transverse struts (54, 56, 58, 98).

5. Cladding according to one of Claims 1 to 4, characterised in that a base plate (58) is arranged in the front region between the side frame portions (32, 34).

6. Cladding according to one of Claims 1 to 5, characterised in that essentially vertical guide elements (42) are arranged in opposing side frame portions (32, 34) to receive the radiator (48).

7. Cladding according to one of Claims 1 to 6, characterised in that a transverse strut (56) is located in the upper frame region between two side frame portions (32, 34), said transverse strut providing the frame (26) with torsional stiffness and serving to receive vehicle components.

8. Cladding according to one of Claims 1 to 7, characterised in that a shroud, with the radiator (48) located in front of it, may be attached to the frame (26) so that when the frame (26) is assembled, it cooperates with the engine fan.

9. Cladding according to one of Claims 1 to 8, characterised in that the frame (26) is composed at least partially of U-shaped sections.

10. Cladding according to one of Claims 1 to 9, characterised in that the frame (26) has longitudinally extending frame members (36) which remain visible from the outside after the covering parts have been attached.

11. Cladding according to one of Claims 1 to 10, characterised in that several side cladding parts (20, 22, 24), which may be assembled individually and of which at least one is in the form of a door flap (20), may be attached on at least one side of the frame (26).

12. Cladding according to one of Claims 1 to 11, characterised in that the engine hood (14) extends over the length of the frame (26) and that it can be erected around a rear link arranged to the frame (26).

13. Cladding according to one of Claims 1 to 12, characterised in that the front grill is constructed in two parts, and that an upper front grill (16) may be attached to the front end of the engine hood (14) and a lower front grill (18) may be attached to the frame (26).

## Revendications

1. Habillage pour le compartiment moteur d'un véhicule automobile, notamment d'un véhicule agricole ou industriel, et au moyen duquel le moteur ainsi que d'autres composants du véhicule sont recouverts au moins partiellement par des éléments de recouvrement, comme par exemple le capot moteur (14), la calandre (16,18) et des revêtements latéraux (20,22,24), et comportant un cadre de forme stable (26) entourant le compartiment moteur et sur lequel peuvent être fixés les éléments de recouvrement et qui forme, avec les éléments de recouvrement, une unité pouvant être fixée au moteur, à un support fixé au moteur ou à un châssis (88) du véhicule, caractérisé en ce que des composants du véhicule, tels que le radiateur, le radiateur d'huile, le filtre à air, la batterie et le condenseur pour une installation de climatisation ainsi que, éventuellement, leurs lignes électriques ou conduites hydrauliques, peuvent être fixés sur le cadre (26) de telle sorte que ce dernier forme, avec les composants du véhicule, une unité pouvant être préassemblée.

2. Habillage selon la revendication 1, caractérisé en ce que le cadre (26) prend appui essentiellement en trois emplacements sur le support ou le châssis (88) du véhicule, au moyen d'éléments de liaison élastiques (94).

3. Habillage selon la revendication 2, caractérisé en ce que deux points d'appui (92), situés latéralement relativement près l'un de l'autre sont présents dans la partie avant du cadre (26) et deux points d'appui (90) relativement largement écartés l'un de l'autre à proximité des limites latérales du châssis, sont situés dans la partie arrière du cadre (26).

4. Habillage selon l'une des revendications 1 à 3, caractérisé en ce que le cadre (26) est réalisé en forme de boîte et est constitué par deux éléments latéraux (32,34) possédant une forme essentiellement rectangulaire et formés chacun d'une seule pièce et qui peuvent être réunis par vissage par l'intermédiaire de traverses (54,56, 58,98).

5. Habillage selon l'une des revendications 1 à 4, caractérisé en ce qu'une plaque de plancher (58) est disposée dans la partie avant entre des éléments latéraux (32,34) du cadre.

6. Habillage selon l'une des revendications 1 à 5, caractérisé en ce que les éléments de guidage (42) essentiellement verticaux et servant à loger un radiateur (48) sont disposés dans des parties latérales opposées (32, 34) du cadre.

7. Habillage selon l'une des revendications 1 à 6, caractérisé en ce que dans la partie supérieure du cadre et entre les deux parties latérales (32,34) de ce dernier est disposée une traverse (56), qui confère au cadre (26) une rigidité contre toute torsion et sert à loger des composants du véhicule.

8. Habillage selon l'une des revendications 1 à 7, caractérisé en ce que sur le cadre (26) peut être fixé un capot, en amont duquel est disposé le radiateur (48) et qui, lorsque le cadre (26) est monté, coopère avec le ventilateur du moteur.

9. Habillage selon l'une des revendications 1 à 8, caractérisé en ce que le cadre (26) est constitué au moins partiellement par l'assemblage de profilés en U.

10. Habillage selon l'une des revendications 1 à 9, caractérisé en ce que le cadre (26) comporte des éléments longitudinaux (36), qui restent visibles de l'extérieur après le montage des parties de recouvrement.

11. Habillage selon l'une des revendications 1 à 10, caractérisé en ce que sur au moins un côté du cadre (26) peuvent être fixés plusieurs éléments latéraux d'habillage (20,22,24) pouvant être montés individuellement et dont l'un au moins est réalisé sous la forme d'un volet (20).

12. Habillage selon l'une des revendications 1 à 11, caractérisé en ce que le capot moteur (14) s'étend sur la longueur du cadre (26) et qu'on peut le relever autour d'une articulation arrière fixée au cadre (26).

13. Habillage selon l'une des revendications 1 à 12, caractérisé en ce que la calandre est formée de deux éléments et qu'une calandre avant (16) peut être fixée sur l'extrémité supérieure du capot intérieur (14) et qu'une calandre inférieure (18) peut être fixée au cadre (26).
